# FASCICULE DE BREVET EUROPEEN

(11) **EP 0 698 220 B1**
(45) Date de publication et mention de la délivrance du brevet: **27.05.1998**
(21) Numéro de dépôt: 95912296.1
(22) Date de dépôt: 10.03.1995
(51) Int. Cl.: G01V 1/28

(54) **PROCEDE DE MODELISATION DE DONNEES SISMIQUES CINEMATIQUES AYANT SUBI UN TRAITEMENT PAR AU MOINS UN OPERATEUR DE DEPLACEMENT**
VERFAHREN ZUR MODELLISIERUNG VON KINEMATISCHEN SEISMISCHEN DATEN,DIE DURCH MINDESTENS EINEN BEWEGUNGSOPERATOR BEARBEITET WORDEN SIND
METHOD FOR MODELLING KINEMATIC SEISMIC DATA PROCESSED WITH AT LEAST ONE MOTION OPERATOR

(30) Priorité: 11.03.1994 FR 9402842
(43) Date de publication de la demande: 28.02.1996
(73) Titulaire: ELF AQUITAINE PRODUCTION, 92400 Courbevoie (FR); ELF ENTERPRISE CALEDONIA LTD., London SW1E 6NN (GB); ELF EXPLORATION UK, London SW1E 6NN (GB)
(72) Inventeur: RAYNAUD, Bernard, Middlessex HA5 1HH (GB); ROBEIN, Etienne, F-64110 Jurençon (FR)
(74) Mandataire: Levy, David
(86) Numéro de dépôt international: FR9500280
(87) Numéro de publication internationale: WO9524659

(56) Documents cités:
- WO-A-92/18883
- FR-A- 2 697 347
- GB-A- 2 226 884
- US-A- 4 964 089
- FIRST BREAK, vol. 4, LONDON, S. M. DEREGOWSKY 'What is DMO?'
- SIAM J. APPL. MATH., vol. 43, PHILADELPHIA, PA, USA, page 981 H. B. KELLER ET AL. 'Fast seismic ray tracing'
- GEOPHYSICAL PROSPECTING, vol. 41, THE HAGUE NL, page 621 M. DIETRICH ET AL. 'Migration to zero offset (DMO) for a constant velocity gradient: an analytical formulation'

## Description

La présente invention concerne un procédé de modélisation, notamment en trois dimensions, de données sismiques cinématiques ayant subi un traitement par au moins un opérateur de déplacement.

Par opérateurs de déplacement, on désigne les traitements qui repositionnent les énergies sismiques. Ces traitements sont bien connus des spécialistes et certains sont indiqués ultérieurement dans la description.

Pour connaître la structure géométrique des couches géologiques du sous-sol, il est usuel, en exploration pétrolière, d'étudier la propagation dans le sous-sol d'ondes élastiques ou acoustiques émises en surface par des émetteurs situés en des points dits "points de tir". Les ondes se propageant dans le sous-sol, sont ensuite réfléchies par les réflecteurs que constituent les différentes limites de couches, et sont ainsi renvoyées vers la surface où elles provoquent des vibrations du sol en fonction du temps qui sont enregistrées sur des récepteurs situés en des points dits "points de réception". On associe à chacun des enregistrements la position d'un point milieu situé au milieu du segment joignant le point de tir et le point de réception associés à l'enregistrement. Le dispositif d'acquisition est tel que plusieurs enregistrements différents peuvent être associés à un même point milieu ou à une même zone en surface dite "BIN" et que les différents points milieux, en général à équidistance les uns des autres, s'alignent suivant une ligne dite profil sismique ou se positionnent sur une grille généralement régulière ("grille 3D").

Classiquement, chacun des enregistrements de la collection d'enregistrements associés à un même point milieu, dite "collection point milieu" (CMP), est traité pour corriger les effets d'obliquité du trajet suivi par l'onde acoustique en fonction de la distance entre le point de tir et le point de réception, en ramenant l'enregistrement au temps théorique correspondant aux points de tir et de réception confondus en leur point milieu initial ou déport émetteur-récepteur nul. Les corrections dynamiques dites corrections NMO (Normal Move Out), destinées à corriger les effets d'obliquité des trajets acoustiques sont fonction de vitesses dites "vitesses de sommation" et permettent théoriquement de simuler l'enregistrement que l'on aurait obtenu si le point de tir et le point de réception avaient été situés au point milieu. La sommation des enregistrements de chacune des collections après corrections permet d'obtenir des enregistrements somme dits traces-somme dont la juxtaposition selon les coordonnées du point milieu ou du centre du bin constitue le "bloc sismique somme 3D" que l'on peut assimiler à une image déformée du sous-sol à trois dimensions -le temps selon la verticale et deux distances selon l'horizontale.

Toutefois, la correction NMO fait un certain nombre d'hypothèses limitatives. C'est pourquoi, il a été mis au point et utilisé très largement depuis lors un traitement dit DMO (Dip Move Out) qui est généralement appliqué sur les données sismiques avant sommation (stack) mais après la correction NMO, de manière à éliminer, autant que faire se peut, l'effet du pendage des réflecteurs sur les vitesses de stack. Une description détaillée de l'opérateur DMO est donnée dans l'article "What is DMO" de S.M. DEREGOWSKI, publié dans FIRST BREAK, volume 4, n°. 7, July 1986, pages 7-24, ainsi que dans d'autres publications citées notamment dans le brevet US-A-4 878 204.

Mais, l'opérateur DMO, s'appuie sur des hypothèses relativement simples. Il arrive donc qu'on applique aux données sismiques des opérateurs plus complexes. On peut citer, en particulier, l'opérateur de "migration-temps avant somme".

Ayant obtenu un bloc-sismique somme 3D satisfaisant et l'ensemble correspondant de vitesses de stack, on procède généralement à l'étape de "migration-temps 3D". L'opération de migration a pour but de fournir à l'inter-prétateur une image acoustique du sous-sol qui se rapproche le plus possible d'une image géologique. Cependant, le traitement par l'opérateur de migration-temps est basé sur une version simplifiée de l'équation d'onde et ne prend pas en compte les détails les plus fins du champ de vitesses de propagation du sous-sol. Il est toutefois efficace, stable et fournit une image facilement interprétable, mais les approximations faites entraînent une imprécision dans le positionnement dans l'espace des événements sismiques.

Une autre étape du traitement des données sismiques consiste à créer une image en profondeur du sous-sol la plus exacte possible. Cette étape s'appelle la migration profondeur lorsqu'on utilise l'ensemble des données sismiques, ou la migration de cartes lorsqu'on se limite à convertir en profondeur un pointé interprétatif des événements sismiques.

Les deux techniques nécessitent, au préalable, la définition d'un modèle de vitesses du sous-sol en profondeur.

Divers procédés d'obtention de ces modèles de vitesse, appelés macro-modèles, sont décrits dans la littérature. On peut se référer utilement à l'article de E. LANDA et al. "A method for determination of velocity and depth from seismic reflection data", publié dans la revue "GEOPHYSICAL PROSPECTING" n° 86, pages 223 à 243, 1988.

Une autre méthode pour réaliser le modèle de vitesses du sous-sol en profondeur, consiste à réaliser une "démigration" des interprétations migrées. Une telle méthode fut décrite par WHITCOMBE en 1991 au congrès SEG. La "démigration" proposée par WHITCOMBE est basée sur un calcul cinématique de la position pré-migrée d'une pluralité de points distribués régulièrement aux noeuds d'un maillage et définissant une surface migrée. Toutefois, tous les points de la distribution régulière démigrent indépendamment les uns des autres. Ceci a pour inconvénient de calculer la surface démigrée à partir d'une série de points, l'obtention d'une surface démigrée régulièrement maillée à partir de ces dits points est une opération d'interpolation peu aisée.

En fait, tous les procédés connus nécessitent soit de modéliser la donnée ou information sismique pour une série de positions, puis de simuler l'opérateur pour chacune de ces positions et ensuite d'interpoler les résultats post-opérateur pour déterminer les événements aux positions auxquelles on s'intéresse, soit d'appliquer aux temps utilisés mesurés ou modélisés des formules correctives approximatives.

La présente invention a pour but de proposer un procédé plus simplifié qui permet l'estimation des temps de trajet des réflexions sismiques observées en un point quelconque de la surface avant ou après corrections dynamiques (NMO) et après traitement par un opérateur de déplacement ou une séquence quelconque d'opérateurs de déplacement.

Un objet de la présente invention est de simuler l'action précise des opérateurs de déplacement avec les paramètres réels qui ont été utilisés, de manière à simuler les événements sismiques qui sont observés en pratique plutôt que ceux qui seraient observés avec un opérateur de déplacement idéal avec des paramètres parfaits.

Par exemple, l'opérateur DMO est appliqué usuellement pour éliminer l'effet de pendage sur les vitesses de sommation mais les formes standard de l'opérateur DMO supposent une vitesse constante partout dans le sous-sol. Il en résulte que l'opérateur standard DMO n'élimine que partiellement l'effet de pendage dans un modèle du sous-sol à vitesses variables.

Selon la présente invention, il est possible de déterminer dans un modèle tridimensionnel du sous-sol, les temps de trajet d'une réflexion sismique et le pendage-temps apparent observés en une position quelconque après que cette réflexion ait subi un ou plusieurs opérateurs de déplacement.

Le pendage-temps est le vecteur (δt/δx, δt/δy), différentiel du temps par rapport aux coordonnées.

La présente invention est applicable pour un modèle du sous-sol incluant une description détaillée de la géométrie des réflecteurs et des propriétés du sous-sol régissant les propagations sismiques, à savoir en particulier, des lois de vitesses de propagation et des paramètres d'anisotropie.

La présente invention est applicable également lorsque la description de la cinématique des opérateurs de déplacement est donnée par des fonctions analytiques, des formules mathématiques ou par toute autre forme digitalisée de réponses impulsionnelles théoriques ou réelles d'opérateurs qui sont eux-mêmes définis en fonction de paramètres adéquats.

Des applications utiles de la présente invention concernent :
- la simulation des vitesses de sommation observées dans les données qu'on a traitées par l'opérateur DMO ;
- la simulation des vitesses de sommation qui ont subi une migration-temps ou une migration-profondeur avant sommation ;
- la simulation des événements correspondant aux géométries des sous-sol d'intérêt qui sont observées sur les sections sismiques ayant subi une migration-temps avec un champ de vitesses approché.

Toutes ces fonctions peuvent être utilisées dans les méthodes tomographiques qui sont destinées à établir un modèle géométrique du sous-sol.

Parmi les opérateurs de déplacement, on peut, par exemple, citer :
- le DMO à vitesse constante (c'est-à-dire une section sismique traitée par NMO, puis par DMO à vitesse constante puis par NMO inverse).
- Migration-Temps du type KIRCHHOFF après sommation (stack) c'est-à-dire une migration par sommation (stacking) sur une hyperbole,
- la Migration effective pré-stack réalisée par la séquence incluant NMO, DMO à vitesse constante, migration-temps après-stack à vitesse constante et NMO inverse.
- DMO à vitesse variable avec la profondeur comme décrit dans GEOPHYSICAL PROSPECTING, 1993, n° 41, pages 621 à 643 dont les auteurs sont MM DIETRICH et COHEN,
- migration en profondeur (par tracé de rayon inverse sous incidence normale).

Il serait même possible d'appliquer la présente invention à une section sismique traitée successivement par plusieurs de ces opérateurs.

Les applications du procédé selon l'invention sont, par exemple ; l'inversion des vitesses de sommation ou d'addition après DMO, c'est-à-dire en fait, la réalisation d'un modèle de vitesses du sous-sol par procédé tomographique à partir de temps observés par exemple après migration-temps, et de vitesses de sommation calculés par exemple après application du DMO.
- la confirmation que le DMO, qui est usuellement validé pour de faibles variations de vitesse, améliore ou non la qualité de l'information sismique, dans le cas où la structure du sol est quelque peu compliquée,
- l'identification des artefacts dans une interprétation faite à partir d'une section migrée, par exemple la vérification de savoir si l'événement sélectionné est conforme à la géométrie d'un horizon hypothétique.

Le procédé selon la présente invention est particulièrement intéressant pour modéliser des informations ou données sismiques telles que :
- les temps de trajet dans une section migrée en temps à déport ou offset nul lorsqu'on connaît le modèle de vitesses du sol et le modèle de vitesses utilisé pour la migration,
- les temps de trajet dans une collection de traces CMP traitées (à point milieu commun), lorsqu'on connaît le modèle de vitesses du sol et le modèle de vitesses utilisé dans la séquence de traitement NMO, DMO, NMO inverse,
- les temps de trajet dans une collection de traces CMP après application d'une migration en temps avant stack, lorsqu'on connaît le modèle de vitesses du sous-sol et les modèles de vitesses utilisés dans la séquence de traitement NMO, DMO, Migration en temps, NMO inverse.

On peut utiliser de manière indirecte le procédé selon l'invention lorsqu'on veut déterminer :
- la profondeur d'un horizon identifié dans une section migrée en temps, lorsqu'on connaît le modèle de vitesses du sol et le modèle de vitesses utilisé dans la migration,
- la profondeur réelle ou vraie d'un horizon identifié dans une section migrée en profondeur, lorsqu'on connaît le modèle de vitesses du sol et le modèle de vitesses utilisé dans la migration en profondeur.

Le procédé selon l'invention consiste à réaliser les étapes suivantes :
a) on utilise un modèle représentatif des réflecteurs d'un milieu et des lois de vitesses dans au moins une couche dudit milieu ;
b) on se fixe un point de référence (N) à la surface du modèle et un premier point de départ (N₁) confondu ou proche dudit point de référence, ledit premier point de départ (N₁) constituant le point milieu d'un système émetteur-récepteur à offset prédéterminé et constant ;
c) on fait un tracé de rayon dans le modèle pour le système émetteur-récepteur de point milieu (N₁) et par rapport à un réflecteur déterminé dudit modèle, et on détermine des paramètres dudit rayon tels qu'au moins le temps de trajet et le pendage apparent pour le système émetteur-récepteur et le réflecteur considérés ;
d) on traite lesdits paramètres par au moins un opérateur de déplacement, de manière à obtenir un premier point d'arrivée (N'₁) qu'on repère sur le modèle, ledit premier point d'arrivée (N'₁) étant l'image du premier point de départ (N₁) après application dudit opérateur de déplacement ;
e) on détermine l'écart (ΔE) en position entre le point de référence (N) et le premier point d'arrivée (N'₁) et on compare ledit écart (ΔE) avec un écart prédéterminé (Δe)
f) on choisit un deuxième point de départ (N₂) qui est situé de l'autre côté du point de référence (N) par rapport au premier point d'arrivée (N'₁) ;
g) on procède aux étapes c) à f) sur chaque nouveau point d'arrivée (N'ᵢ) jusqu'à ce que pour un point d'arrivée final (N') l'écart (ΔE) soit inférieur ou égal à l'écart prédéterminé (Δe) ; et
h) on mémorise le point final (N') du modèle ainsi que les paramètres du rayon correspondant.

Les paramètres du rayon mentionnés au point c) ci-dessus sont déterminés par des méthodes de calcul bien connues des spécialistes et tiennent compte du modèle considéré, ainsi que cela fut mentionné précédemment.

Les particularités ou paramètres du ou des opérateurs de déplacement qui sont utilisés pour traiter les paramètres dudit rayon, peuvent être ceux qui sont liés à la position du point milieu lui-même, le ou les opérateurs de déplacement étant définis soit par une formule mathématique, soit par une autre relation connue.

Lorsque cela est nécessaire, on détermine les particularités ou paramètres du ou des opérateurs de déplacement utilisés dans le traitement, qui correspondent au point de départ (Ni) ou au point image (N'i), tels que l'azimut du système émetteur-récepteur, vitesse de correction NMO, etc...

Un avantage de la présente invention réside dans le fait qu'on modélise la véritable action des opérateurs de traitement plutôt que leur idéalisation qui est basée sur les actions espérées desdits opérateurs. Par exemple, il est préférable de simuler les cinétiques du DMO sur les événements modélisés plutôt que de supposer que le DMO a parfaitement éliminé les effets du pendage sur les vitesses de stack. Ceci est dû au fait que la plupart des algorithmes utilisés sont approximatifs car ils sont définis pour travailler dans des conditions idéales qui peuvent ne pas être satisfaites dans le modèle à étudier.

D'autres avantages et caractéristiques ressortiront mieux à la lecture de la description suivante ainsi que des dessins annexés sur lesquels :

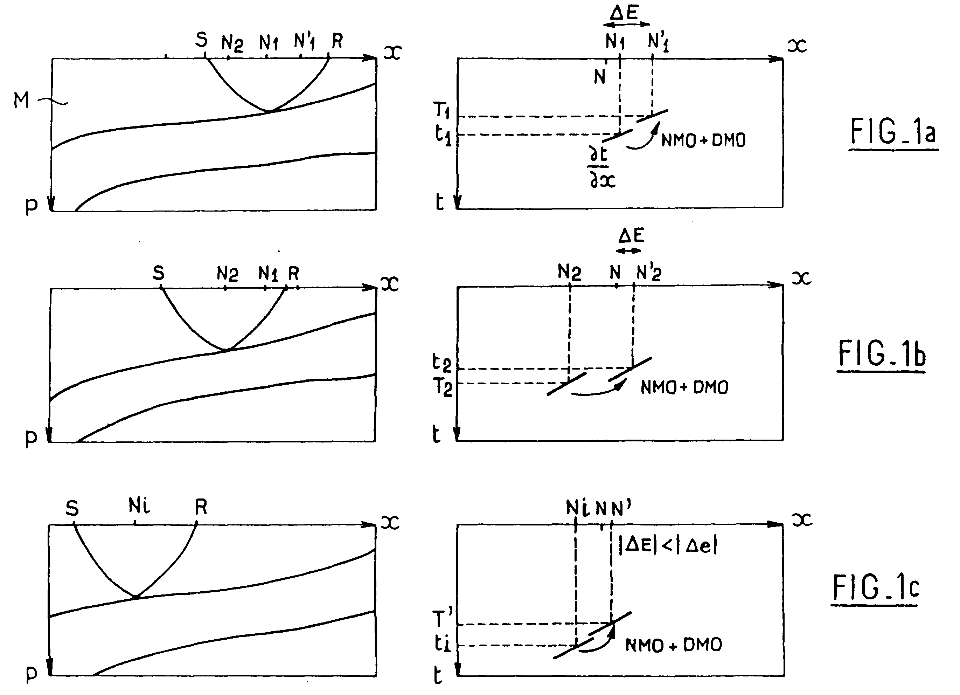

les figures 1a à 1c sont des représentations synoptiques à deux dimensions (x, t) du procédé selon l'invention appliqué à une section sismique traitée par un opérateur de déplacement tel qu'un DMO ou une migration temps,

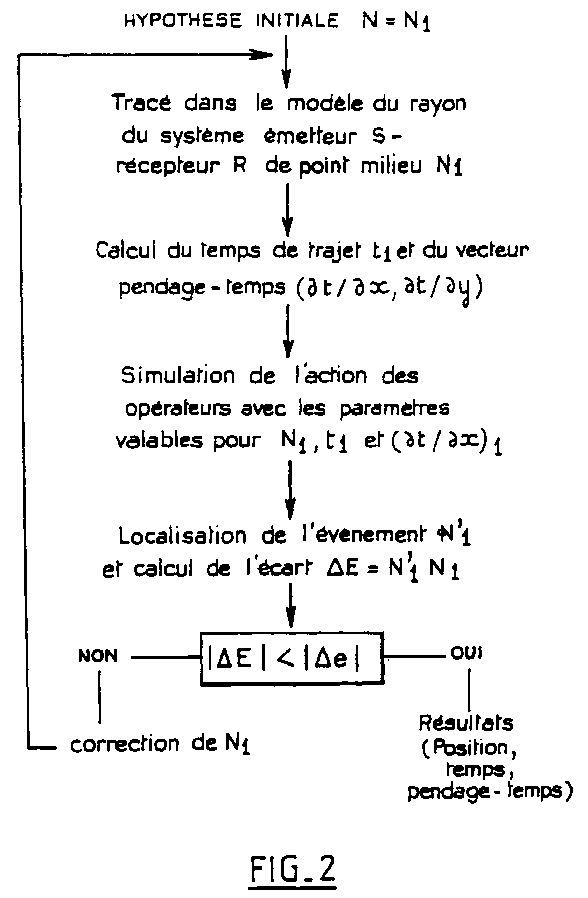

la figure 2 est un organigramme correspondant aux étapes du procédé selon les figures 1a à 1c,

Les figures 3 sont des représentations en deux dimensions d'une réponse impulsionnelle d'un opérateur de déplacement utilisé dans le présente invention.

Dans une première application du procédé selon l'invention, on souhaite connaître le temps et le pendage-temps d'un point de référence, situé en N à la surface d'un modèle M après qu'il ait subi un ou plusieurs opérateurs de déplacement, par exemple un opérateur DMO à vitesse constante. Le modèle M est représentatif des horizons H ou réflecteurs du milieu concerné et des lois de vitesses dans au moins une couche dudit milieu, ainsi que des paramètres d'anisotropie.

On choisit un système émetteur S-récepteur R d'offset prédéterminé et qui sera conservé constant pendant tout le procédé. Le point milieu N₁ dudit système émetteur-récepteur est proche du point de référence N, par exemple confondu avec N, et il est considéré comme étant le premier point de départ.

Dans une autre étape, on réalise un tracé ou lancer de rayon, bien connu des spécialistes, du point S au point R à travers le modèle et pour un horizon H donné. On en déduit le temps t₁ et le vecteur pendage-temps δt₁/δx en N₁.

Dans une représentation à deux dimensions (x, t), le vecteur pendage-temps est δt/δx alors que dans une représentation à trois dimensions (x, y, t), le vecteur pendage-temps a comme composantes δt/δx et δt/δy.

Dans une autre étape, on applique au temps t₁ et au pendage-temps δt₁/δx un ou plusieurs opérateurs de déplacement. En particulier on applique au point de départ N₁ l'opérateur NMO correspondant à une vitesse RMS (Root Mean Square) prédéterminée puis l'opérateur de déplacement, par exemple DMO à vitesse constante, pour obtenir la position du premier point d'arrivée N'₁ ainsi que notamment le temps T₁ et le pendage-temps δT₁/δx.

On détermine ensuite la distance écart ΔE séparant le premier point d'arrivée N'₁ du point de référence N et on la compare à un écart prédéterminé Δe qui est nécessairement petit puisqu'on cherche précisément l'événement par rapport au point de référence N.

Lorsque l'écart ΔE est inacceptable, on choisit un autre point de départ N₂ qui est situé de l'autre côté du point de référence N par rapport au premier point d'arrivée N'₁, de préférence tel que N₂ N₁ soit proche de N₁ N'₁.

Le point de départ N₂ constitue le milieu du système émetteur S-récepteur R à offset constant et un lancer de rayon correspondant au point N₂ est effectué. Les paramètres dudit rayon sont traités par l'opérateur de déplacement, de manière à obtenir un deuxième point d'arrivée N'₂ dont l'écart en position par rapport au point de référence N, est comparé avec l'écart prédéterminé Δe.

On effectue une ou plusieurs autres itérations en choisissant d'autres points de départ Nᵢ, en simulant, à chaque fois l'opérateur de déplacement et en utilisant les paramètres adaptés à sa localisation, jusqu'à l'obtention d'un point final N', considéré comme acceptable.

Ensuite, on mémorise ledit point final N' ainsi que par exemple les temps de trajet, les paramètres du rayon correspondant au point milieu du système émetteur-récepteur dont l'image est N', considérée comme suffisamment proche du point de référence N. Notamment, on mémorise la position du point de référence N, le temps et le vecteur pendage-temps t et δt/δx avant l'action de l'opérateur de déplacement ainsi que les temps T et pendage-temps δT/δx après l'action dudit opérateur de déplacement.

Dans une deuxième autre application du procédé selon l'invention, on veut connaître la vitesse de sommation modélisée en une position donnée B₁, après application de l'opérateur de déplacement DMO, pour une collection de traces ayant même point milieu commun et différents systèmes émetteur-récepteur. Dans une première étape, on procède de la même manière que pour l'application précédente pour un premier système émetteur-récepteur qui est défini par son azimut et son offset correspondant.

On complète le procédé en appliquant au temps trouvé l'opérateur NMO inverse correspondant à la vitesse RMS prédéterminée applicable en B₁.

Dans une autre étape, on répète l'étape ci-dessus pour l'ensemble des systèmes émetteur-récepteur à étudier.

Dans une dernière étape, on déduit pour des couples offset-temps, la vitesse de sommation par régression selon des méthodes bien connues des spécialistes.

Dans la méthode de tomographie, bien connue des spécialistes, on est amené à comparer des temps de trajet ou des vitesses de sommation calculés sur un modèle, aux temps de trajet et vitesses de sommation mesurés sur des données sismiques. Les données sismiques ont généralement subi un traitement DMO sur section à offset constant et parfois une migration-temps. Le procédé selon l'invention permet de prendre en compte correctement et à l'endroit désiré sans interpolation, les traitements subis par les données sismiques et de déterminer plus facilement lesdits temps de trajet et/ou vitesses de sommation. De ce fait, on améliore très sensiblement la technique de tomographie.

Le procédé décrit ci-dessus est applicable pour la simulation notamment des opérateurs de déplacement suivants :
- le DMO avec l'hypothèse d'une vitesse constante, c'est-à-dire la séquence NMO puis DMO vitesse constante puis NMO inverse.
- la migration à offset nul qui utilise un champ de vitesses RMS (Root Mean Square),
- la migration à offset nul "avant stack" c'est-à-dire une migration appliquée à des sections à offset constant ayant subi les opérateurs NMO et DMO,

Un aspect intéressant du procédé selon l'invention réside dans le fait que sa réalisation est particulièrement efficace lorsque le lancer de rayon est remplacé par la technique du "Ray-Bending" (voir par exemple "FAST SEISMIC RAY TRACING" H.B. KELLER et D.J. PEROZZI, SIAM A PPL MATH, VOL 43 N. 4, AUG. 1983).

Le "Ray-Bending" classique, utilisé à la place d'un lancer ou tracé de rayon, mentionné dans la description, consiste à maintenir fixes l'émetteur et le récepteur et à déplacer un ou plusieurs des "noeuds" (intersections du trajet géométrique avec les divers miroirs ou strates rencontrés par le trajet entre l'émetteur et le récepteur, après traversée du milieu) y compris le point de réflexion, jusqu'à ce que le temps de trajet soit minimum.

Cette minimisation est effectuée généralement par itérations. A chaque itération, on déplace un ou plusieurs noeuds dans une direction définie par un gradient tel que le temps de trajet global diminue.

Dans le procédé selon l'invention, on améliore le "Ray-Bending" en déplaçant également l'émetteur et le récepteur. Le déplacement de ces noeuds particuliers se fait au cours des itérations mentionnées ci-dessus, selon le procédé défini également plus haut, pour le point milieu et de manière à respecter l'azimut local et l'offset du système émetteur-récepteur. Le déplacement de ces noeuds particuliers ou des autres noeuds peut se faire en tenant compte de la courbure des interfaces (réflecteurs) et de leur pendage et en particulier de la courbure et du pendage du réflecteur considéré.

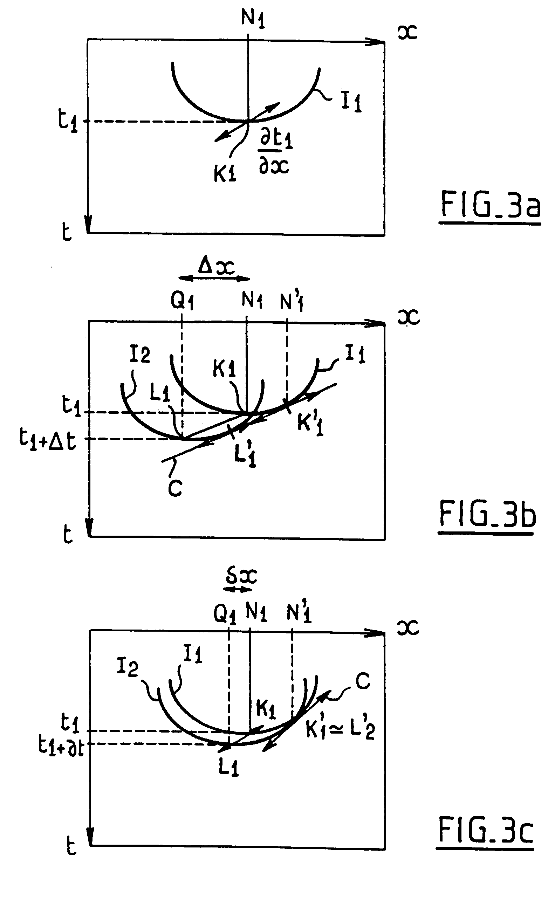

Un autre aspect intéressant du procédé selon l'invention réside dans le fait que l'opérateur de déplacement peut être défini par sa réponse impulsionnelle qui peut être quelconque. Dans ce cas particulier, le calcul du déplacement, du temps et du nouveau pendage après applicaton de l'opérateur peut se faire en fonction du temps et du pendage temps (δt/δx) initial selon le schéma de la figure 3. Ce schéma est donné en deux dimensions mais peut être généralisé à trois dimensions, par exemple en appliquant le procédé selon x et y.

Sur la figure 3a, on a représenté l'opérateur de déplacement I₁ à appliquer au point K₁, de coordonnées x, t₁ et correspondant au point en surface N₁.

Sur la figure 3b, on a représenté en plus de l'opérateur de déplacement I₁, l'opérateur de déplacement I₂ à appliquer au point L₁ d'ordonnée t₁ + Δt et correspondant à un deuxième point en surface Q₁, distant de N₁, de Δx, de telle sorte que Δt/Δx est égal au pendage δt/δx du rayon.

Le point image N'₁ est défini par le point en surface à la verticale du point K'₁ où la tangente commune C(L'₁, K'₁) aux réponses impulsionnelles I₁ et I₂ est tangente à la réponse impulsionnelle I₁, la pente de la tangente en K'₁ définit le nouveau pendage-temps après application de l'opérateur.

Le procédé peut être amélioré (figure 3c) en prenant pour Δx une valeur suffisamment petite δx pour que la recherche de la tangente commune puisse se réduire avec une bonne approximation à la recherche du point d'intersection des deux courbes. Le pendage-temps cherché sera la pente de l'opérateur au point d'intersection

La recherche de la tangente commune C(L'₁K'₂) au point d'intersection K'₁ quand δx est petit peut se faire de manière numérique selon des méthodes bien connues, que l'opérateur de déplacement soit connu sous forme de formule analytique ou donné sous forme d'un tableau de couple de valeur (x, t) ou selon toute autre forme utilisable dans un ordinateur.

## Revendications

1. Procédé de modélisation de données sismiques cinématiques ayant subi un traitement par un opérateur de déplacement, caractérisé en ce qu'il consiste à réaliser les étapes suivantes :
a) on utilise un modèle représentatif des réflecteurs d'un milieu et des lois de vitesses dans au moins une couche dudit milieu ;
b) on se fixe un point de référence (N) à la surface du modèle et un premier point de départ (N₁) confondu ou proche dudit point de référence, ledit premier point de départ (N₁) constituant le point milieu d'un système émetteur-récepteur à offset prédéterminé et constant ;
c) on fait un tracé de rayon dans le modèle pour le système émetteur-récepteur de point milieu (N₁) et par rapport à un réflecteur déterminé dudit modèle, et on détermine des paramètres dudit rayon tels qu'au moins le temps de trajet et le pendage apparent pour le système émetteur-récepteur et le réflecteur considérés ;
d) on traite lesdits paramètres par au moins un opérateur de déplacement, de manière à obtenir un premier point d'arrivée (N'₁) qu'on repère sur le modèle, ledit premier point d'arrivée (N'₁) étant l'image du premier point de départ (N₁) après application dudit opérateur de déplacement ;
e) on détermine l'écart (ΔE) en position entre le point de référence (N) et le premier point d'arrivée (N'₁) et on compare ledit écart (ΔE) avec un écart prédéterminé (Δe)
f) on choisit un deuxième point de départ (N₂) qui est situé de l'autre côté du point de référence (N) par rapport au premier point d'arrivée (N'₁) ;
g) on procède aux étapes c) à f) sur chaque nouveau point d'arrivée (N'ᵢ) jusqu'à ce que pour un point d'arrivée final (N') l'écart (ΔE) soit inférieur ou égale à l'écart prédéterminé (Δe) ; et
h) on mémorise le point final (N') du modèle ainsi que les paramètres du rayon correspondant.

2. Procédé selon la revendication 1, caractérisé en ce qu'il est mis en oeuvre pour chaque réflecteur du milieu.

3. Procédé selon l'une des revendications 1 ou 2, caractérisé en ce qu'il est mis en oeuvre pour chaque offset d'une collection de traces à point milieu commun ou en "bin" commun.

4. Procédé selon l'une des revendications précédentes caractérisé en ce que l'opérateur de déplacement est un opérateur DMO.

5. Procédé selon l'une des revendications 1 à 3, caractérisé en ce que l'opérateur de déplacement est un opérateur de migration avant sommation.

6. Procédé selon l'une des revendications 1 à 3, caractérisé en ce que l'opérateur de déplacement est un opérateur de migration après sommation.

7. Procédé selon l'une des revendications 1 à 3, caractérisé en ce que l'opérateur de déplacement est un opérateur combiné DMO et de migration.

8. Procédé selon l'une des revendications 1 à 7, caractérisé en ce que l'opérateur de déplacement est décrit par des fonctions analytiques ou par une réponse impulsionnelle.

9. Procédé selon la revendication 1, caractérisé en ce que le tracé de rayon dans le modèle est effectué par une technique connue en soi dite de "Ray-Bending" qui consiste à maintenir fixes l'émetteur et le récepteur et à déplacer un ou plusieurs des noeuds y compris le point de réflexion jusqu'à ce que le temps de trajet soit minimum.

10. Procédé selon la revendication 9, caractérisé en ce qu'on améliore le "Ray-Bending" en déplaçant également l'émetteur et le récepteur tout en maintenant constant l'offset du système émetteur-récepteur, les autres caractéristiques telles que l'azimut pouvant être adaptées selon la localisation du système récepteur.

11. Procédé selon l'une des revendications 1 à 10, caractérisé en ce qu'il est utilisé pour l'obtention d'une tomographie.

## Patentansprüche

1. Verfahren zur Modellisierung von kinematischen seismischen Daten, die durch einen Bewegungsoperator bearbeitet worden sind, dadurch gekennzeichnet, daß es aus den folgenden Schritten besteht:
a) man verwendet ein Modell, das die Reflektoren eines Milieus und die Geschwindigkeitsgesetze in mindestens einer Schicht dieses Milieus darstellt,
b) man legt einen Bezugspunkt (N) auf der Oberfläche des Modells und einen ersten Ausgangspunkt (N₁) fest, der mit dem Bezugspunkt zusammenfällt oder diesem nahe ist und der den Mittelpunkt eines Sende- und Empfangssystems mit vorbestimmtem und konstantem Offset bildet,
c) man zieht in dem Modell einen Strahl für das Sende- und Empfangssystem von dem Mittelpunkt (N₁) und bezüglich eines bestimmten Reflektors des Modells und man bestimmt Parameter dieses Strahls wie mindestens die Laufzeit und das scheinbare Einfallen für das Sende- und Empfangssystem und den betreffenden Reflektor,
d) man verarbeitet diese Paramater durch mindestens einen Bewegungsoperator, so daß man einen ersten Ankunftspunkt (N'₁) erhält, dessen Lage man auf dem Modell bestimmt, wobei dieser erste Ankunftspunkt (N'₁) das Bild des ersten Ausgangspunkts (N₁) nach Anlegen des Bewegungsoperators ist,
e) man bestimmt die Lageabweichung (ΔE) zwischen dem Bezugspunkt (N) und dem ersten Ankunftspunkt(N'₁) und vergleicht diese Abweichung ( ΔE) mit einer vorbestimmten Abweichung ( Δe),
f) man wählt einen zweiten Ausgangspunkt (N₂), der bezüglich des ersten Ankunftspunkts (N'₁) auf der anderen Seite des Bezugspunkts (N) gelegen ist,
g) man nimmt die Schritte c) bis f) bei jedem neuen Ankunftspunkt (N'ᵢ) vor, bis bei einem Endankunftspunkt (N') die Abweichung ( ΔE) kleiner als oder gleich der vorbestimmten Abweichung (Δe) ist, und
h) man speichert den Endpunkt (N') des Modells sowie die Parameter des entsprechenden Strahls.

2. Verfahren nach Anspruch 1, dadurch gekennzeichnet, daß es für jeden Reflektor des Milieus durchgeführt wird.

3. Verfahren nach einem der Ansprüche 1 oder 2, dadurch gekennzeichnet, daß es für jedes Offset einer Sammlung von gezogenen Strahlen mit gemeinsamem Mittelpunkt oder gemeinsamem "Bin" durchgeführt wird.

4. Verfahren nach einem der vorhergehenden Ansprüche, dadurch gekennzeichnet, daß der Bewegungsoperator ein DMO-Operator ist.

5. Verfahren nach einem der Ansprüche 1 bis 3, dadurch gekennzeichnet, daß der Bewegungsoperator ein "Migration vor Summation"-Operator ist.

6. Verfahren nach einem der Ansprüche 1 bis 3, dadurch gekennzeichnet, daß der Bewegungsoperator ein "Migration nach Summation"-Operator ist.

7. Verfahren nach einem der Ansprüche 1 bis 3, dadurch gekennzeichnet, daß der Bewegungsoperator ein kombinierter DMO- und Migrations-Operator ist.

8. Verfahren nach einem der Ansprüche 1 bis 7 , dadurch gekennzeichnet, daß der Bewegungsoperator durch analytische Funktionen oder durch eine Impulsreaktion beschrieben wird.

9. Verfahren nach Anspruch 1, dadurch gekennzeichnet, daß die Strahlziehung im Modell durch eine an sich bekannte, "Ray-Bendig" genannte Technik vorgenommen wird, die darin besteht, daß der Sender und der Empfänger feststehend gehalten werden und daß einer oder mehrere der Knoten, einschließlich des Reflexionspunkts, bewegt werden, bis die Laufzeit auf einem Minimum ist.

10. Verfahren nach Anspruch 2, dadurch gekennzeichnet, daß man das "Ray-Bending" verbessert, indem man auch den Sender und den Empfänger bewegt, wobei man gleichzeitig das Offset des Sende- und Empfangssystems konstant hält, wobei die anderen Kenngrößen wie der Azimut je nach dem Standort des Empfangssystems angepaßt werden können.

11. Verfahren nach einem der Ansprüche 1 bis 10, dadurch gekennzeichnet, daß es zur Erstellung einer Tomographie verwendet wird.

## Claims

1. Method of modelling kinematic seismic data that has been processed by a migration operator, characterised in that it comprises the following steps:
a) a model is used representing reflectors of a medium and velocity laws in at least one layer of said medium;
b) a reference point (N) is defined on the surface of the model and a first starting point (N₁) is defined coincident with or near said reference point, said first starting point (N₁) constituting the mid-point of a source-receiver system having a predetermined and constant offset;
c) ray tracing is carried out in the model for the source-receiver system having the mid-point (N₁) and relative to a predetermined reflector of said model, and parameters of said ray are determined such as at least the travel time and the apparent dip for the source-receiver system and the reflector in question;
d) said parameters are processed by means of at least one displacement operator to obtain a first point of arrival (N'₁) that is marked on the model, said first point of arrival (N'₁) imaging the first starting point (N₁) after application of said displacement operator;
e) the offset (ΔE) between the reference point (N) and the first point of arrival (N'₁) is determined and said offset (ΔE) is compared with a predetermined offset (Δe);
f) a second starting point (N₂) is chosen on the opposite side of the reference point (N) relative to the first point of arrival (N'₁);
g) steps c) through f) are executed for each new point of arrival (N'ᵢ) until, for a final point of arrival (N'), the offset (ΔE) is less than or equal to the predetermined offset (Δe); and
h) the final point (N') of the model and the parameters of the corresponding ray are stored in memory.

2. Method according to claim 1 characterised in that it is used for each reflector of the medium.

3. Method according to claim 1 or claim 2 characterised in that it is used for each offset of a gather of traces having a common mid-point or common bin.

4. Method according to any one of the preceding claims characterised in that the displacement operator is a DMO operator.

5. Method according to any one of claims 1 to 3 characterised in that the displacement operator is a prestack migration operator.

6. Operator according to any one of claims 1 to 3 characterised in that the displacement operator is a post-stack migration operator.

7. Method according to any one of claims 1 to 3 characterised in that the displacement operator is a combined DMO and migration operator.

8. Method according to any one of claims 1 to 7 characterised in that the displacement operator is described by analytical functions or by an impulse response.

9. Method according to claim 1 characterised in that ray tracing in the model is effected by a "ray-bending technique known in itself that entails maintaining the source and the receiver fixed and displacing one or more nodes including the point of reflection until the travel time is minimised.

10. Method according to claim 9 characterised in that the "ray-bending" technique is improved by also shifting the source and the receiver but maintaining a constant source-receiver system offset, the other characteristics such as the azimuth being adapted to suit the location of the receiver system.

11. Method according to any one of claims 1 to 10 characterised in that it is used to obtain a tomograph.
